# EUROPEAN PATENT SPECIFICATION

(11) **EP 2 858 398 B1**
(45) Date of publication and mention of the grant of the patent: **29.08.2018**
(21) Application number: 13797175.0
(22) Date of filing: 31.05.2013
(51) Int. Cl.: H04W 16/14, H04W 72/12

(54) **WIRELESS COMMUNICATION METHOD, BASE STATION AND USER EQUIPMENT**
DRAHTLOSES KOMMUNIKATIONSVERFAHREN, BASISSTATION UND BENUTZERGERÄT
PROCÉDÉ DE COMMUNICATION SANS FIL, STATION DE BASE ET ÉQUIPEMENT UTILISATEUR

(30) Priority: 31.05.2012 CN 201210176604
(43) Date of publication of application: 08.04.2015
(73) Proprietor: Huawei Technologies Co., Ltd., Longgang District Shenzhen, Guangdong 518129 (CN)
(72) Inventor: LI, Chaojun, Shenzhen Guangdong 518129 (CN); ZHOU, Mingyu, Shenzhen Guangdong 518129 (CN); LI, Yang, Shenzhen Guangdong 518129 (CN)
(74) Representative: Epping - Hermann - Fischer
(86) International application number: PCT/CN2013/076524
(87) International publication number: WO 2013/178084

(56) References cited:
- WO-A1-01/26253
- CN-A- 1 956 432
- CN-A- 101 167 321
- US-A1- 2008 285 673
- US-A1- 2009 092 066
- US-A1- 2009 268 641
- US-A1- 2009 325 578
- SCHULTZ D ET AL: "Proposal of the best Suited Deployment Concepts for the identified Scenarios and related RAN Protocols", INTERNET CITATION, 31 December 2005 (2005-12-31), pages 1-2,58, XP002519327, Retrieved from the Internet: URL:http://www.ist-winner.org/DeliverableD ocuments/D3.5.pdf [retrieved on 2009-03-13]

## Description

### FIELD OF INVENTION

The present invention relates to the technical field of communications, and in particular to a radio communication method, a base station and user equipment.

### BACKGROUND

In an existing frequency division duplex or time division duplex radio communication system, on a same radio resource, only one-way data transmission can be performed for a communication between a user equipment (User Equipment, UE) and a base station, namely, the base station can only receive uplink data sent by the user equipment, or send downlink data to the user equipment.

However, as a radio spectrum resource is very scarce and expensive, a full-duplex communication technology is provided in order to improve a utilization rate of the spectrum resource. The full-duplex communication technology, through adopting a certain technological means, for example, cancelling signals from a plurality of transmitting antennas at a receiving antenna through an appropriate antenna deployment, or performing an interference cancellation through signals transmitted by a known transmitting circuit in a receiving circuit, and the like on a communication device, reduces interference generated when the communication device sends and receives signals simultaneously, in order that the communication device may realize a two-way data transmission on the same radio resource. Considering problems of cost and complexity restrictions of a UE and the backward compatibility problem of a legacy UE, in an existing full-duplex system, the full-duplex communication technology is only supported on a base station side, while the technology may not be supported on a UE side. In this case, on a same resource, different UEs may be in different states (receiving or sending state).

However, in the existing full-duplex system, for a UE, when receiving a downlink data, an uplink data sent by other UE will be received, which influences a receiving quality of the downlink data by interference.

In addition, US 2009/092066 A1 relates to techniques for link utilization for half-duplex and full-duplex stations in a wireless network. Specifically, the document discloses Base stations (BSs), Access Points (APs) or other infrastructure nodes may typically be Full Duplex-FDD (FD-FDD), in which the BSs may transmit and receive at the same time but on different frequencies.

US 2009/325578 A1 relates to a support for multi-group frequency division duplex wireless network. Specifically, US 2009/325578 A1 discloses that according to an example embodiment, mobile stations in a frequency-division duplex (FDD) wireless network may, for example, be divided up into two (or more) groups (for example) to provide a more efficient use of channel resources, so that a base station (BS) may allocate the uplink carrier frequency and the downlink carrier frequency resources to different groups at a time. Thus, Frequency Division Duplexing may be used to provide different uplink and downlink carrier frequencies or resources, which may allow some MSs to transmit, which other MSs are receiving, for example.

### SUMMARY

Embodiments of the present invention provide a radio communication method and a base station to reduce an interference between user equipments in an existing full-duplex radio communication system.

An embodiment of the present invention provides a radio communication method, including:
grouping user equipments within a service range of a base station;
configuring radio resource patterns for user equipments in each group, wherein radio resource patterns configured for user equipments in a same group are identical, and radio resource patterns configured for user equipments in different groups are different, and wherein a radio resource pattern comprise at least one of the followings: a pattern used for a time domain resource, a pattern used for a frequency domain resource, a pattern used for a time-frequency domain resource, a pattern used for a code domain resource and a pattern used for a space domain resource; and
selecting, according to the configured radio resource patterns, multiple user equipments, which are respectively in different communication states on a same radio resource, for communication, wherein the radio resource is a combination of a time and a frequency resource, wherein the multiple user equipments are respectively in different groups, and wherein the communication states comprise an uplink transmission state and a downlink receiving state.

An embodiment of the present invention provides a base station, including:
a grouping unit, configured to group user equipments within a service range of a base station;
a resource pattern configuring unit, configured to configure radio resource patterns for user equipments in each group, wherein radio resource patterns configured for user equipments in a same group are identical, and radio resource patterns configured for user equipments in different groups are different, and wherein a radio resource pattern comprise at least one of the followings: a pattern used for a time domain resource, a pattern used for a frequency domain resource, a pattern used for a time-frequency domain resource, a pattern used for a code domain resource and a pattern used for a space domain resource; and
a communication unit, configured to select, according to the configured radio resource patterns configured by the resource pattern configuring unit, multiple user equipments, which are respectively in different communication states on a same radio resource for communication, wherein the radio resource is a combination of a time and a frequency resource, wherein the multiple user equipments are respectively in different groups, and wherein the communication states comprise an uplink transmission state and a downlink receiving state.

In the embodiment of the present invention, in a system in which a base station supports full-duplex radio communication, the base station needs to group user equipments within its service range, configure an identical radio resource pattern for the user equipments in the same group and configure different radio resource patterns for the user equipments in different groups. In this way, in a process that the base station selects, according to the configured radio resource patterns, multiple user equipments, which are in different communication states on the same radio resource for communication, not all the user equipments will receive the uplink data sent by other user equipment, and only user equipments in different groups may have different communication states on the same radio resource respectively. In this way, an interference between user equipments, resulting from that each user equipment will receive the uplink data of other user equipment in an existing full-duplex radio communication system, can be reduced appropriately.

### BRIEF DESCRIPTION OF DRAWINGS

To illustrate a technical solution in an embodiment of the present invention or in the prior art more clearly, a brief introduction on accompanying drawings which are needed in the description of the embodiments or the prior art is given below. Apparently, the accompanying drawings in the description below are merely some of embodiments of the present invention. Other accompanying drawings can be obtained according to these accompanying drawings by those of ordinary skill in the art without any creative effort.
Fig.1 is a flowchart of a radio communication method provided by an embodiment of the present invention;
Fig.2 is a flowchart of another radio communication method provided by an embodiment of the present invention;
Fig.3 is a flowchart of another radio communication method provided by an embodiment of the present invention;
Fig.4 is a structural schematic diagram of a base station provided by an embodiment of the present invention;
Fig.5 is a structural schematic diagram of another base station provided by an embodiment of the present invention;
Fig.6 is a structural schematic diagram of a user equipment provided by an embodiment of the present invention; and
Fig.7 is a structural schematic diagram of another user equipment provided by an embodiment of the present invention.

### DESCRIPTION OF EMBODIMENTS

A clear and complete description of technical solutions in the embodiments of the present invention will be given below, in combination with the accompanying drawings in the embodiments of the present invention.

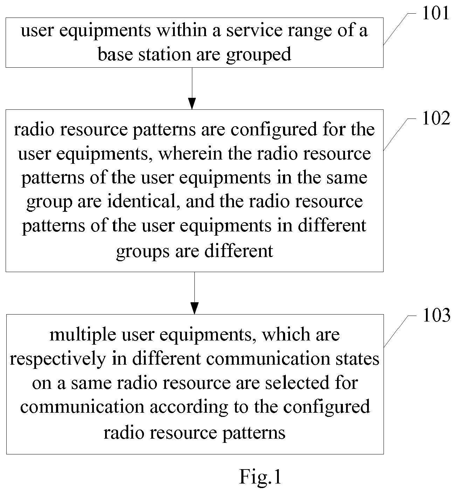

An embodiment of the present invention provides a radio communication method, applied to a radio communication performed under a scenario where a base station side may support a full-duplex radio communication, while a UE side may not support a full-duplexing radio communication in radio communication systems, such as a long term evolution (Long Term Evolution, LTE), a long term evolution advanced (Long Term Evolution Advanced, LTE-A), a 3rd-generation (3rd-Generation, 3G) mobile communication system and a worldwide
interoperability for microwave access (Worldwide Interoperability for Microwave Access, WiMAX) or the like. Wherein the base station may perform the radio communication according to following steps, and the flowchart is as shown in Fig.1, including the following steps.

Step 101, user equipments within a service range of a base station is grouped.

When allocating resources to the user equipments within its service range, the base station may firstly group the user equipments. The base station may group the user equipments according to a preset strategy, for example, grouping the user equipments according to a capacity of a user equipment for generating interference to other user equipment, and user equipments with high capacities for generating interferences are grouped into one group, so as to minimize interferences between the user equipments. Or the user equipments are randomly grouped, etc. The preset strategy herein may be preset in the base station by a user as needed, the specific content of which does not constitute a limit to the present invention.

In a specific implementation process, the base station may group the user equipments according to several manners in following.
(1) The base station may obtain path loss information of the user equipments within the service range of the base station, and group user equipments whose path loss difference is smaller than a preset path loss range in the same group. The path loss information herein refers to a loss of a radio signal in a transmission process between two communication devices. In the implementation, the path loss information may be used for measuring an interference condition between user equipments. The interference between user equipments with a similar path loss is larger, and the base station groups the user equipments with the similar path loss into one group. Specifically, the base station may obtain path loss information of a UE by measuring a signal strength of an uplink signal of the UE or measuring a signal strength of feedback information of the UE. In the implementation, the uplink signal of the UE includes a sounding reference signal (Sounding Reference Signal, SRS) or the like, and the feedback information of the UE includes a reference signal received power (Reference Signal Received Power, RSRP) or the like.
   In other embodiment, the base station may also determine an interference condition between the user equipments by obtaining other parameters, and group the user equipments according to the interference condition, in order to ensure smaller interference between user equipments in different groups.
(2) The base station may obtain service parameters of the user equipments within the service range of the base station, and group user equipments having a uniform service parameter in the same group. The service parameter includes a service volume and/or service type. Since different user equipments have different service requirements, the base station, in this case, may allocate different resources to user equipments with different service parameters when allocating resources to user equipments in each group, through grouping user equipments with non-uniform service parameters into different groups. The service diversity of the user equipments is considered.
   For example, the base station may allocate more downlink radio resources to a user equipment in a group having a large downlink service volume, allocate more uplink radio resources to a user equipment in the group having a large uplink service volume, allocate more idle radio resources to a user equipment in the group having a smaller uplink and downlink service volume, and allocate larger flexible radio resources to a user equipment in the group having a large uplink and downlink service fluctuation.
(3) The base station may obtain duplexing (Duplexing) technologies and/or multiple access (multiple access, MA) technologies supported by the user equipments within the service range of the base station, and group a user equipment supporting a same duplexing technology and/or multiple access technology into one group. Wherein the duplexing technology includes a frequency division duplex (frequency division duplex, FDD) and a time division duplex (time division duplex, TDD), and the multiple access technology includes an orthogonal frequency division multiple access (Orthogonal Frequency Division Multiple Access, OFDMA), a single carrier-frequency division multiple access (Single Carrier-Frequency Division Multiple Access, SC-FDMA), and the like.

It may be understood that, the base station may also group the user equipment in other manners, such as grouping the user equipment randomly, which is simple and feasible. Considering that some user equipment is legacy (legacy) UEs or UEs initially accessed to the base station, the base station could not obtain information of these UEs, such as interference state and the like, and capacities for processing interference of the legacy UEs are weaker, in this case, the base station may group the legacy user equipments and/or the user equipments initially accessed to the base station in one group. Moreover, when grouping the user equipments, the base station may define information such as the number of user equipments in each group, the total number of groups, and so on. Wherein, a legacy UE refers to a user equipment not supporting a full-duplex standard.

Step 102, radio resource patterns are configured for user equipments in each group. It may specifically include at least one of the following resources: a pattern used for a time domain resource (e.g., a pattern used for a time domain subframe), a pattern used for a frequency domain resource (e.g., a pattern used for a frequency domain resource block), a pattern used for a time-frequency domain resource, a pattern used for a code domain resource and a pattern used for a space domain resource or the like. Radio resource patterns configured for user equipments within a group are identical, and radio resource patterns configured for user equipments in different groups are different.

It should be understood that, in a radio communication system, according to a use condition, a radio resource may be divided into an uplink radio resource, a downlink radio resource, an idle radio resource and a flexible radio resource. Wherein, the uplink and the downlink radio resources are necessary. Moreover, according to different attributes, the radio resource mainly includes a time domain, frequency domain, code domain and space domain resource. A radio resource pattern refer to a configured pattern of the base station for the time domain, frequency domain, code domain and/or space domain resource, or a pattern for a UE using the time domain, frequency domain, code domain and/or space domain resources. Namely, it is specified that which radio resource is used as an uplink radio resource, which radio resource is used as a downlink radio resource, which radio resource is used as an idle radio resources and which radio resource is used as a flexible radio resource. Wherein the idle radio resource refers to the radio resource where a base station or a UE does not receive data nor send data, and the flexible radio resource refers to the radio resource where a base station or a UE is without a constraint, that is, both receiving data and sending data are allowable.

Step 103, multiple user equipments (at least two user equipments), which are respectively in different communication states on a same radio resource is selected for communication according to the configured radio resource patterns, and the communication states herein include an uplink transmission state and a downlink receiving state.

After configuring the radio resource patterns, the base station may firstly perform an uplink and downlink pairing when communicating the user equipments, and perform full-duplex radio communication with the paired user equipments. Wherein the uplink and downlink pairing refers to selecting multiple user equipments, which are respectively in different communication states on the same radio resource, and on a same radio resource, it may only be at one communication state for one user equipment, namely, in a uplink transmission state or a downlink receiving state. In the multiple user equipments performing the uplink and downlink pairing, some user equipments on the same radio resource performs an uplink transmission, and the other user equipments performs downlink receiving. In this way, on some radio resources, the base station may receive uplink data of some or one user equipment while sending downlink data.

After the base station allocates the radio resource patterns to the user equipment in each group, a uplink and downlink pairing could not be performed for UEs in a same group as the radio resource patterns used are identical. A uplink and downlink pairing may be performed for UEs in different groups as different communication states only occur respectively between UEs in different groups on some radio resources. For example, the base station configures an uplink and downlink subframe configuration 0 for a group 1 and configures an uplink and downlink subframe configuration 2 for a group 2. On subframes with subframe numbers of 3, 4, 8 and 9, UEs in the group 1 are at an uplink sending state, and UEs in the group 2 is at a downlink receiving state, then the base station may perform an uplink and downlink pairing between UEs in the group 1 and the group 2 on the subframes with subframe numbers of 3, 4, 8 and 9.

It should be noted that, if the base station groups the initially accessed UEs and/or legacy UEs in one group, considering factors such as the base station could not accurately learn the interference condition of the user equipment in the group and the like, the base station may perform no uplink and downlink pairing between the UEs in the group and UEs in other group. Namely, on the same radio resource, the base station does not select a user equipment in the group to communicate with a user equipment in other group, which has a different communication state with the user equipment in the group. Specifically, the base station will not receive uplink data of the user equipment in the group when sending downlink data to the user equipment in other group on some radio resources.

Furthermore, in the embodiment, after configuring the radio resource patterns, the base station may inform corresponding user equipments of the configured radio resource pattern through a high layer signaling or signaling carried by a downlink control channel. Wherein, the signaling carried by the downlink control channel belongs to a physical layer signaling, and relative to the physical layer signaling, the high layer signaling (High Layer Signaling) is a signaling which is from a higher level with a slower sending rate. It may include a radio resource control (RRC, Radio Resource Control) signaling and a media access control (MAC, Media Access Control) signaling, and the like. Preferably, the base station respectively informs a radio resource pattern of each user equipment to the each user equipment through a dedicated RRC (dedicated RRC) signaling.

It can be seen, in the embodiment of the present invention, in a system in which a base station supports full-duplex radio communication, the base station needs to group user equipments within its service range, configure an identical radio resource pattern for the user equipments in the same group and configure different radio resource patterns for the user equipments in different groups. In this way, in a process that the base station selects, according to the configured radio resource patterns, multiple user equipments, which are in different communication states on the same radio resource for communication, not all the user equipments will receive the uplink data sent by other user equipment, and only user equipments in different groups may have different communication states on the same radio resource respectively. Therefore, in an existing full-duplex radio communication system, interference between user equipments, resulting from that each user equipment will receive the uplink data of other user equipment, may be reduced. If when grouping the user equipments, the base station groups the user equipments with smaller interference in different groups, the interference between the user equipment in the existing full-duplex radio communication system will be further reduced.

In other specific embodiment, when a base station executes the above-mentioned step 102, there may exist the following several situations.
(1) The radio resource is a time domain resource.
   When the time domain resource is measured by a subframe (subframe), the radio resource pattern may be a pattern used for a time domain subframe (called a subframe pattern for short). Namely, it is specified that which subframes are used as uplink subframes, which subframes are used as downlink subframes, which subframes are used as idle subframes and which subframes are used as flexible subframes. At this time, the base station configures an identical subframe pattern for the UEs in the same group and configures different subframe patterns for the UEs in different groups.
   Wherein, for a system supporting a TDD, the subframe pattern may be, but not limited to, 7 uplink-downlink subframe configurations (UL-DL subframe allocation) defined in an existing LTE TDD Release-8 system. For example, the base station configures an uplink-downlink subframe configuration 0 for a user equipment in group 1 and configures an uplink-downlink subframe configuration 2 for a user equipment in group 2. For a scenario with a stronger interference of user equipments between groups, the base station may configure available subframes which are completely different for different groups. For example, it is configured by the base station that the user equipments in the group 1 only use odd subframes and the user equipments in the group 2 only use even subframes.
(2) The radio resource is a frequency domain resource.
   When the frequency domain resource is measured by a resource block (Resource block, RB), the radio resource pattern may be a pattern used for a frequency domain RB (called an RB pattern for short), namely, it is specified that which RBs are used as uplink RBs, which RBs are used as downlink RBs, which RBs are used as idle RBs and which RBs are used as flexible RBs. At this time, the base station configures an identical RB pattern for the UEs in the same group and configures different RB patterns for the UEs in different groups.
   For a scenario with stronger interferences of user equipments between groups, the base station may configure available RBs which are completely different for the user equipments in different groups. For example, it is configured by the base station that user equipments in group 1 only use a front half of RBs in a system bandwidth and user equipments in group 2 only use a latter half of the RBs in the system bandwidth.
(3) The radio resource is a time-frequency domain resource.
   A pattern used for the time-frequency domain resource is as follows: which RBs and subframes are used as uplink resources, which RBs and subframes are used as downlink resources, which RBs and subframes are used as idle resources and which RBs and subframes are used as flexible resources. At this time, the base station configures an identical time-frequency domain resource pattern for UEs in the same group and configures different time-frequency domain resource patterns for UEs in different groups.
(4) The radio resource is a code domain resource, for example, resources of N orthogonal codes, low correlation codes, or the like. The base station configures an identical code domain pattern for UEs in the same group and configures different code domain patterns for UEs in different groups. For example, it is configured by the base station that user equipments in group 1 use an orthogonal code 1 and user equipments in group 2 use an orthogonal code 2, etc.
(5) The radio resource is a space domain resource, such as a resource of an air beam resource and son on. The base station configures an identical space domain pattern for UEs in the same group and configures different space domain pattern for UEs in different groups. For example, it is configured by the base station that user equipments in group 1 use air beams 1 to n and user equipments in group 2 use air beams n+1 to m.

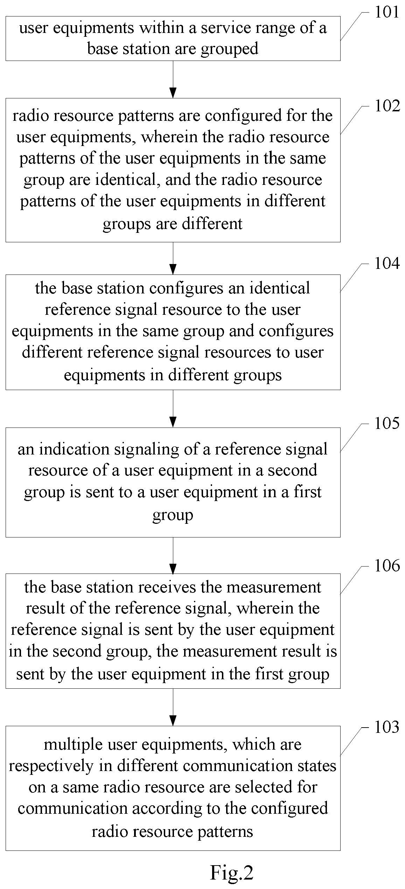

See Fig.2, in another specific embodiment, in order to reduce, according to actual conditions of user equipments in each group, the interference more accurately, before executing the above-mentioned step 103, the base station further executes steps 104 to 106.

Step 104, reference signal (Reference Signal, RS) resources are configured for the user equipments in each group, namely, it is specified that which radio resources are used for the user equipments to send RSs. Specifically, the base station configures an identical reference signal resource for the user equipments in the same group and configures different reference signal resources for user equipments in different groups, wherein the RS is used for measuring a parameter such as an interference strength, etc.

Step 105, an indication signaling of a reference signal resource configured by the base station for a user equipment in a second group is sent to a user equipment in a selected first group. The first group and the second group herein are not to indicate a relation of a sequence, but to indicate they are different groups.

In the embodiment, the base station may send an indication signaling of a reference signal resource configured for a user equipment in each group to a user equipment in any group. Such as a user equipment in the first group. In this way, the user equipment in the first group may know a RS resource of a user equipment in other group according to the indication signaling, receive RS sent by the user equipment in other group on the RS resources of the user equipment in other group (e.g., second group), measure parameter information (e.g., strength information or the like) of a received RS to learn an interference situation between the user equipment in the group and the user equipment in other group, and report a measurement result to the base station.

For example, when the base station sends a RS resource of the second group to a user equipment in the first group, in this way, the user equipment in the first group may receive a reference signal sent by the user equipment in the second group on the RS resource of the second group, measure the reference signal, and may report the measurement result to the base station.

Step 106, the base station receives the measurement result of the reference signal, wherein the reference signal is sent by the user equipment in the second group, the measurement result is sent by the user equipment in the first group, the measurement result is used for indicating interference information between the user equipment in the first group and the user equipment in the second group. For example, the reported measurement result may be parameter information such as a strength of the received reference signal and the like. The larger the strength of the reference signal is, the larger the interference between the user equipments is.

After executing the step 106, and when executing the step 103, the uplink and downlink pairing is performed not only according to the configured radio resource patterns, but also according to the received measurement result, and a full-duplex radio communication is performed with the uplink and downlink paired user equipments, namely, the user equipments which are respectively in different communication states on the same radio resource and a mutual interference of which is smaller than a preset range is selected for communication. For example, if a measurement result received by the base station is a strength of a reference signal, wherein the reference signal is sent by a user equipment in other group and the measurement result is reported by a user equipment in some group, the base station performs an uplink and downlink pairing on the user equipment in the group with a user equipment in other group a strength of a reference signal sent by which is smaller than a preset value. Namely, the user equipments with a smaller interference is paired.

Preferably, the above-mentioned RS resource may be a channel state information reference signal (Channel State Information Reference Signal, CSI RS) resource. There is a backward compatibility for a legacy UE when adopting a CSI RS for measuring the interference between the user equipments. Namely, after receiving a CSI RS sent by a UE in some group, the legacy UE may measure an interference by using an existing protocol and report the interference, i.e., the CSI RS is considered as information sent by other cell for measurement.

It should be noted that, there is no determined sequential relation between the above-mentioned step 102 and step 104. They may be performed simultaneously or sequentially, and it is merely a specific embodiment shown in Fig.2.

In other specific embodiment, besides executing the above-mentioned steps 101 to 106, the base station further needs to configure system information (System information, SI) for the user equipments in each group, in order to make the user equipments know parameter information of an accessed system. Specifically, the base station configures identical system information for the user equipments in the same group and configures different system information for the user equipments in different groups. Wherein SI is a necessary parameter for an operation of a radio communication system, and may include a master information block (Master Information Block, MIB) and a plurality of different types of system information blocks (System Information Blocks, SIB). The SIB includes a plurality of types, for example, the current system includes an SIB 1, an SIB 2, ..., an SIB 13, etc.

When the base station configures SI, some of configured SI is in common, such as a system bandwidth, and some SI is different. Therefore the SI configured to the UEs in different groups by the base station may be partially different. For example, the base station configures different SIB1s for the user equipments in different groups, specifically, a part of information elements (Information element, IE) in the SIB1 may be configured to be different, for example, a tdd-Config used to indicate an uplink and downlink subframe configuration and a particular subframe pattern, a si-WindowLength used to instruct the SI to schedule a window length and a systemInfoValueTag used to indicate a system information variation and the like. The base station may configure different SIB2s for the user equipments in different groups, such as a physical uplink control channel (Physical Uplink Control Channel, PUCCH) configuration information in the SIB2, etc.

After the SI is configured, the base station may inform the user equipment of the SI, and may specifically inform through the following several manners.
(1) By means of a signaling scrambled by a radio network temporary identifier (Radio Network Temporary Identifier, RNTI) of SI, namely, scrambled by an SI-RNTI, which is carried by a physical downlink control channel (Physical Downlink Control channel, PDCCH), the user equipment is informed of the scheduling information of public system information in the configured system information or the scheduling information of system information of a baseline group (Baseline Group). In addition, the base station may change SI configured for each group, and inform the user equipment of the scheduling information of update indicating information of the public SI or SI of the baseline group through a signaling scrambled by a paging RNTI (Paging RNTI, P-RNTI), which is carried by a PDCCH. The above-mentioned scheduling information includes time-frequency domain resource configuration information, for example, a position, a number and the like, and may further include modulation and coding scheme (Modulation and Coding Scheme, MCS) information, etc.
   Wherein the public SI refers to identical SI in the SI configured for all the groups, the baseline group is obtained by the base station through selecting one group from all the groups to serve as the baseline group, the signaling scrambled by the SI-RNTI, which is carried by the PDCCH refers to a new signal obtained by performing a certain operation on the signaling carried by the SI-RNTI and the PDCCH, such as an XOR operation, and the signaling scrambled by the P-RNTI, which is carried by the PDCCH refers to a new signal obtained by performing a certain operation on signaling carried by the P-RNTI and the PDCCH. Moreover, in the embodiment, a value of the SI-RNTI is FFFF (a hexadecimal representation), and a value of the P-RNTI is FFFF (expressed hexadecimally).
(2) By means of signalings scrambled by different group RNTIs (Group RNTI, G-RNTI), which are carried by a physical downlink control channel, corresponding user equipments are informed of the scheduling information of the system information of each group in the configured system information.
   When the base station informs each user equipment in each group of the scheduling information of SI, the base station may adopt an identical G-RNTI for the UEs in the same group and adopt different G-RNTIs for the UEs in different groups. Preferably, the base station may respectively inform each UE of a G-RNTI for use through a dedicated RRC signaling. Wherein, the G-RNTI may be used to generate a channel and a signal corresponding to each group. It should be noted that, in the embodiment of the present invention, a RNTI identifying different groups is called a G-RNTI, but is not limited to this name.
(3) The base station informs the user equipment of the scheduling information of SI of all the groups through a signaling scrambled by the SI-RNTI, which is carried by the PDCCH. In this way, after receiving the signaling scrambled by the SI-RNTI, which is carried by the PDCCH, the user equipment may obtain the SI of the user equipment in all the groups according to the scheduling information. An interference coordination may be better performed.

In order to further perform the interference coordination and interference elimination to reduce interference between UEs, the base station may inform the user equipment of some other information as the system information, such as a sequence group number (sequence group number), primary and secondary bands (primary and secondary bands) and a maximum transmitting power (max transmitting power) etc. Wherein, if a ZC (Zadoff-Chu) sequence is adopted by both an uplink and a downlink, the base station configures different ZC sequence groups for user equipments in different groups and informs a user equipment of a ZC sequence group number which is taken as SI, as uplink and downlink data may be transmitted on a same radio resource. The base station configures different primary and secondary bands for the user equipment in different groups to reduce the interference of the user equipments between groups, a user equipment in each group preferably performs uplink and downlink transmissions on the primary band and performs a transmission on the secondary band after limiting the transmission information (e.g., reducing power). The base station may configure different maximum uplink or downlink transmitting powers for the user equipments in different groups.

It should be noted that, the above-mentioned steps that the base station configures SI for the user equipment has no absolute sequential relation between the steps 102 and 104 in the above-mentioned Fig.2, thus these steps may be performed simultaneously or sequentially.

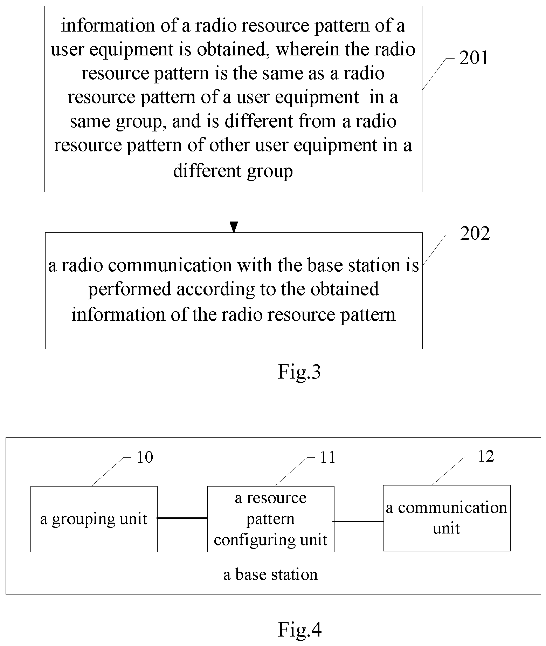

An embodiment of the present invention provides a radio communication method, which is used for radio communication under a scenario where a base station side may support a full-duplex radio communication, while a UE side may not support a full-duplex radio communication in a radio communication system such as an LTE, an LTE-A, a 3G, a WiMAX or the like, wherein a user equipment may perform a radio communication according to the following steps. A flowchart is as shown in Fig.3, including the followings.

Step 201, information of a radio resource pattern configured by a base station for a user equipment is obtained, wherein the radio resource pattern is the same as a radio resource pattern of other user equipment which is in a same group with the user equipment, and is different from a radio resource pattern of other user equipment, which is not in the same group with the user equipment, wherein interference between user equipments in the same group is smaller, or the user equipments in the same group has an identical service parameter or duplexing technology and/or multiple access technology, or the user equipments in the same group all belongs to user equipments initially accessed to the base station or legacy user equipments.

It may be understood that, the radio resource pattern configured by the base station for the user equipment mainly includes a pattern used for a time domain resource, or a pattern used for a frequency domain resource, or a pattern used for a time-frequency domain resource, or a pattern used for a code domain resource, or a pattern used for a space domain resource. A specific configuration process may refer to corresponding embodiments in Fig.1 and Fig.2, and will not be repeated redundantly herein.

When obtaining information of a radio resource pattern, a user equipment may be known that which radio resource of the user equipment is used as an uplink resource a downlink resource an idle resource, a flexible resources or the like, thus knowing that in a process of communication with the base station, which subframe and/or resource block receive uplink data or send downlink data. Specifically, the user equipment may obtain the information of the radio resource pattern through a high layer signaling or signaling carried by a downlink control channel. Preferably, the information of the radio resource pattern of the user equipment sent by the base station may be received by a dedicated RRC signaling.

Step 202, a radio communication with the base station is performed according to the obtained information of the radio resource pattern.

In a process of a full-duplex radio communication between the base station and user equipments, the base station will perform an uplink and downlink pairing for the user equipments, namely, selecting multiple user equipments, which are respectively in different communication states on the same radio resource and communicating with an uplink and downlink paired user equipments. The user equipments communicates with the base station according to information of the radio resource patterns configured by the base station.

It can be seen, in the embodiment of the present invention, the base station configures an identical radio resource pattern for the user equipments in the same group and configures different radio resource patterns for the user equipments in different groups. After the user equipments obtains information of their own radio resource patterns, not every user equipment will receive uplink data sent by other user equipments in a radio communication process with the base station according to the information of the radio resource patterns, and only the user equipments in different groups may have different communication states respectively on the same radio resource. In this way, in an existing full-duplex radio communication system, the interference between the user equipment, resulting from that each user equipment will receive the uplink data of other user equipments, can be reduced. When grouping the user equipments, if the base station groups the user equipment with a smaller interference in different groups, the interference between the user equipments in the existing full-duplex radio communication system will be further reduced.

In a specific embodiment, the base station may configure a reference signal resource for a user equipment in each group, namely, specifying the user equipment to send a reference signal on which radio resource, wherein the reference signal resources configured by the base station for the user equipments in the same group are identical, and the reference signal resources configured for the user equipments in different groups are different.

The base station may send an indication signaling of the reference signal resources of a group to a user equipment in each group. If the user equipment receives the indication signaling of the reference signal resource configured by the base station for the group which the user equipment belongs, it sends a reference signal on the resource indicated by the indication signaling. If receiving an indication signaling of the reference signal resource configured for other user equipment, which is in a different group with the user equipment, the user equipment measures, when receiving a reference signal sent by the user equipment in other groups on the reference signal resource indicated by the indication signaling, the received reference signal, for example, measuring parameters such as strength of the received reference signal etc, and reports a measurement result to the base station to enable the base station to select user equipments, which are respectively in different communication states on the same radio resource, and a mutual interference of which is smaller than a preset range for communication according to the measurement result, wherein the measurement result is configured to indicate the interference information between the user equipment and the user equipment in other group.

In another specific embodiment, the base station may configure system information for a user equipment in each group and inform of the user equipment the system information, wherein the system information configured by the base station for the user equipments in the same group is identical, and the system information configured for the user equipments in different groups may be partially different. Wherein the system information may include a master information block and a plurality of different types of system information blocks, and may further include information such as a sequence group number, primary and secondary bands and maximum transmitting power, etc.

Specifically, when receiving a signaling scrambled by an SI-RNTI, which is carried by a PDCCH, the user equipment may obtain scheduling information of public system information in the system information configured by the base station for the user equipment or scheduling information of system information of a baseline group. If receiving a signaling scrambled by a P-RNTI, which is carried by the PDCCH, the user equipment may obtain scheduling information of update indicating information of public SI or SI of the baseline group. If receiving signaling scrambled by a G-RNTI, which is carried by the PDCCH, the user equipment may obtain scheduling information of system information of the group which the user equipment currently belongs to. If receiving a signaling scrambled by an SI-RNTI, which is carried by the PDCCH, the user equipment may obtain scheduling information of SI of all the groups.

The above-mentioned scheduling information may include time-frequency domain resource configuration information, for example, a position, a number and the like, and may further include MCS information, etc.

An embodiment of the present invention further provides a base station. The base station may support full-duplex radio communication. The structural schematic diagram is as shown in Fig.4, including following units.

A grouping unit 10 is configured to group user equipments within a service range of a base station, and specifically:
The grouping unit 10 may group user equipments with larger interference into one group and group user equipments with smaller interference into different groups. For example, the grouping unit 10 obtains path loss information of the user equipments within a service range of the base station, and groups user equipments whose path loss difference is smaller than a preset path loss range into one group. The grouping unit 10 may also obtain a service parameter of the user equipments within the service range of the base station, and group user equipments with a uniform service parameter into one group, wherein the service parameter includes a service volume and/or service type. The grouping unit 10 may also obtain duplexing technologies and/or multiple access technologies supported by the user equipments within the service range of the base station, and group user equipments supporting a same duplexing technology and/or multiple access technology into one group. The grouping unit 10 may also randomly group the user equipments within the service range of the base station.

A resource pattern configuring unit 11 is configured to configure radio resource patterns for user equipments in each group, which are grouped by the grouping unit 10, wherein radio resource patterns configured for the user equipment in the same group are identical, and radio resource patterns configured for the user equipments in different groups are different. The radio resource pattern may include at least one of following resources: a pattern used for a time domain resource, a pattern used for a frequency domain resource, a pattern used for a time-frequency domain resource, a pattern used for a code domain resource and a pattern used for a space domain resource or the like.

A communication unit 12 is configured to select, according to the radio resource patterns configured by the resource pattern allocating unit 11, multiple user equipments, which are respectively in different communication states on the same radio resource for communication.

Furthermore, if the grouping unit 10 groups legacy user equipments or user equipments initially accessed to the base station into one group, then the communication unit 12, on the same radio resource, does not select the user equipments in the group to communicate with user equipments in other group which have different communication states with the user equipment in the group. Namely, an uplink and downlink pairing on a user equipment in the group and a user equipment in other group is not performed for communication.

In the base station of the embodiment of the present invention, the grouping unit 10 groups the user equipments within its service range, the resource pattern configuring unit 11 configures an identical radio resource pattern for the user equipments in the same group and configures different radio resource patterns for the user equipments in different groups. In this way, in a process that the communication unit 12 selects, according to the configured radio resource patterns, multiple user equipments, which are in different communication states on the same radio resource for communication, not every the user equipments will receive an uplink data sent by other user equipments, and only the user equipments between different groups may have different communication states on the same radio resource respectively. Thus in an existing full-duplex radio communication system, interference between the user equipments, resulting from that each user equipment will receive the uplink data of other user equipments, can be reduced. If the grouping unit 10 groups the user equipments with a smaller interference in different groups when grouping the user equipments, the interference between the user equipments in the existing full-duplex radio communication system will be further reduced.

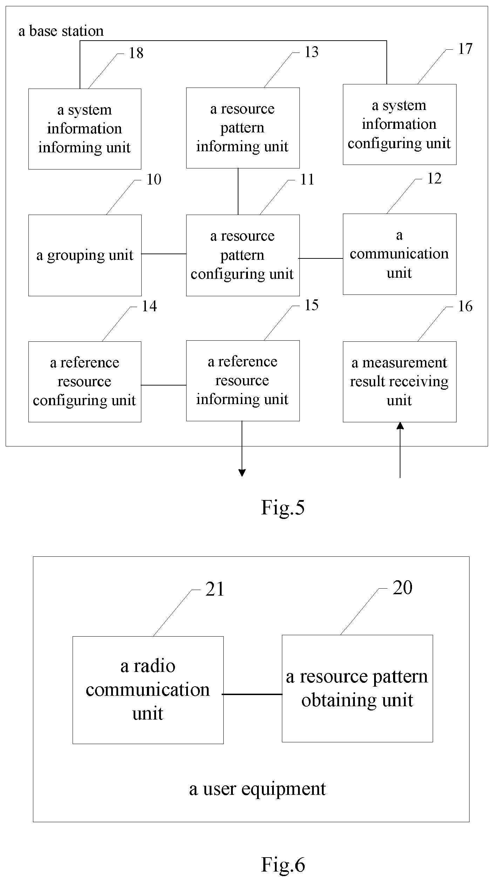

See Fig.5, in a specific embodiment, besides including the structure as shown in Fig.4, the base station may further include a resource pattern informing unit 13, a reference resource configuring unit 14, a reference resource informing unit 15, a measurement result receiving unit 16, a system information configuring unit 17 and a system information informing unit 18.

The resource pattern informing unit 13 is configured to inform corresponding user equipment of a configured radio resource pattern through a high layer signaling or signaling carried by a downlink control channel. Preferably, the resource pattern informing unit 13 may respectively inform each user equipment of a radio resource pattern of each user equipment through a dedicated RRC signaling.

The reference resource configuring unit 14 is configured to configure an identical reference signal resource for the user equipments in the same group and configure different reference signal resources for the user equipments in different groups.

The reference resource informing unit 15 is configured to send an indication signaling of a reference signal resource configured for a user equipment in a second group to the user equipment in a first group.

The measurement result receiving unit 16 is configured to receive a measurement result of a reference signal, wherein the reference signal is sent by the user equipment in the second group, the measurement result is sent by the user equipment in the first group and the measurement result is configured to indicate the interference information between the user equipment in the first group and the user equipment in the second group. For example, the measurement result, which is received by the user equipment in the first group, is strength information of the reference signal sent by the user equipment in the second group, and the like. The larger the strength is, the larger the interference is.

The system information configuring unit 17 is configured to configure identical system information for the user equipments in the same group and configure different system information for the user equipments in different groups. The system information herein may include a master information block and a plurality of different types of system information blocks, and may further include: a sequence group number, primary and secondary bands and maximum transmitting power, etc.

The system information informing unit 18 is configured to inform the user equipment of scheduling information of public system information in the configured system information or the scheduling information of system information of a baseline group through a signaling scrambled by a radio network temporary identifier of the system information, which is carried by a physical downlink control channel; or configured to inform the user equipment of scheduling information of the system information of all the configured groups through a signaling scrambled by a radio network temporary identifier of the system information, which is carried by a physical downlink control channel; or configured to inform the user equipment of scheduling information of update indicating information of the configured public system information or scheduling information of update indicating information of the system information of a baseline group through a signaling scrambled by a paging radio network temporary identifier, which is carried by a physical downlink control channel; or configured to inform corresponding user equipments of scheduling information of the system information of each group in the configured system information through signaling scrambled by different group radio network temporary identifiers, which are carried by a physical downlink control channel.

In the base station of the embodiment of the present invention, after the grouping unit 10 performs grouping, the resource pattern configuring unit 11 may begin to configure the radio resource pattern of the user equipment in each group, the system information configuring unit 17 may also begin to configure the system information of the user equipment in each group, and the reference resource configuring unit 14 may also begin to configure the reference signal resource of the user equipment in each group. Then the resource pattern informing unit 13 informs the user equipment of the configured radio resource patterns for communication, the system information informing unit 18 informs the user equipment of the configured system information for operating the system, and the reference resource informing unit 15 informs the user equipment of the configured reference signal resources to measure the parameter.

After performing the measurement according to the reference signal resource informed by the reference resource informing unit 15, the user equipment sends a measurement report to the base station. When the measurement result receiving unit 16 receives the measurement result, the communication unit 12 can select multiple user equipments, which are respectively in different communication states on the same radio resource and with a mutual interference smaller than a preset range for communication. Namely, an uplink and downlink pairing on the user equipments with a smaller interference is performed according to the radio resource pattern and the measurement result, and a paired user equipment of the uplink and downlink is selected for communication. In this way, an actual interference condition of the user equipments between different groups can be obtained according to the measurement information of the user equipments between different groups, in order that a communication is selected according to the interference condition to further reduce the interference between the user equipments.

An embodiment of the present invention further provides a user equipment. The user equipment may not support a full-duplex communication, and the structural schematic diagram is as shown in Fig.6, including:
a resource pattern obtaining unit 20, configured to obtain information of a radio resource pattern configured by a base station for the user equipment, wherein the radio resource pattern is the same as the radio resource pattern of a user equipment in a same group with the user equipment, and is different from the radio resource pattern of a user equipment, which is not in the same group with the user equipment; and
a radio communication unit 21, configured to perform a radio communication with the base station according to the information of the radio resource pattern obtained by the resource pattern obtaining unit 20, namely, receiving and/or sending data on corresponding resource.

In the embodiment of the present invention, the base station configures an identical radio resource pattern for the user equipments in the same group and configures different radio resource patterns for user equipments in different groups. After the resource pattern obtaining unit 20 of the user equipment obtains the information of its own radio resource pattern, in a process that the radio communication unit 21 performs, according to the information of the radio resource pattern, a radio communication with the base station, not all the user equipments will receive an uplink data sent by other user equipment as only the user equipments in different groups may have different communication states on the same radio resource respectively. In this way, in an existing full-duplex radio communication system, an interference between user equipments, which is resulting from that each user equipment will receive an uplink data of other user equipment, can be reduced. When grouping the user equipments, if the base station groups the user equipments with a smaller interference into different groups, the interference between the user equipments in the existing full-duplex radio communication system will be further reduced.

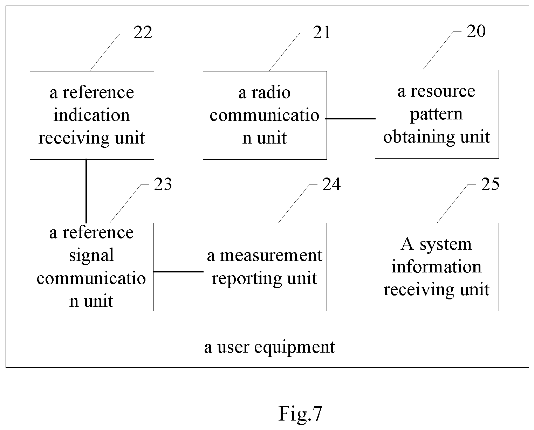

See Fig.7, in a specific embodiment, besides including the structure as shown in Fig.6, the user equipment may further include: a reference indication receiving unit 22, a reference signal communication unit 23 and a measurement reporting unit 24.

The reference indication receiving unit 22 is configured to receive an indication signaling of a reference signal resource configured by the base station for other user equipment, which is in a different group with the user equipment, or receive an indication signaling of the reference signal resource of the user equipment. Wherein the reference signal resources of the user equipments in different groups are different, and the reference signal resources of the user equipments in the same group are identical.

The reference signal communication unit 23 is configured to receive a reference signal sent by other user equipment on the reference signal resource indicated by the indication signaling of the reference signal resource of the user equipment in other group, which is received by the reference indication receiving unit 22. If the reference indication receiving unit 22 receives the indication signaling of the reference signal resource of the group to which the current user equipment belongs, the reference signal communication unit 23 may also send a reference signal on the resource indicated by the indication signaling to enable the user equipment in other group to measure an interference condition with the user equipment.

The measurement reporting unit 24 is configured to measure the reference signal of the user equipment in other group received by the reference signal communication unit 23, such as measuring strength information of the reference signal and the like, and report a measurement result to the base station to enable the base station to select, according to the measurement result, user equipments, which are respectively in different communication states on the same radio resource and an interference between the user equipments is smaller than a preset range, for communication. The measurement result is configured to indicate the interference information between the user equipment and the user equipment in other group.

Furthermore, the user equipment may further include: a system information receiving unit 24, configured to receive system information configured by the base station for the user equipment. The system information is the same as the system information of a user equipment, which is in the same group with the user equipment, and is partially different from the system information of other user equipment, which is not in the same group with the user equipment. The system information specifically includes a master information block and a plurality of different types of system information blocks, and may further include: a sequence group number, primary and secondary bands and maximum transmitting power, etc.

Specifically, when receiving a signaling scrambled by an SI-RNTI, which is carried by a PDCCH, the system information receiving unit 24 may achieve scheduling information of public system information in system information configured by the base station for the user equipment or scheduling information of SI of a baseline group through the signaling, or achieve scheduling information of system information of all the groups. If receiving a signaling scrambled by a P-RNTI, which is carried by a PDCCH, system information receiving unit 24 may achieve scheduling information of an update indication of public system information or SI of a baseline group through the signaling. When receiving a signaling scrambled by a G-RNTI, which is carried by a PDCCH, the system information receiving unit 24 may achieve scheduling information of system information configured by the base station for the user equipment through the signaling.

An embodiment of the present invention further provides a radio communication system, including a base station and multiple user equipments.

The base station is configured to group user equipments within a service range of the base station, configure radio resource patterns for the user equipments in each group, wherein the radio resource patterns configured for the user equipments in the same group are identical, and the radio resource patterns configured for the user equipments in different groups are different, and select, according to the configured radio resource patterns, multiple user equipments, which are in different communication states on a same radio resource for communication.

The user equipments are configured to communicate with the base station according to the radio resource patterns configured by the base station.

Wherein, the structure of the base station may refer to an embodiment corresponding to Fig.4 or Fig.5, and the structure of the user equipment may refer to an embodiment corresponding to Fig.6 or Fig.7. A radio communication may be performed between each units in the base station and in the user equipment according to the descriptions in the above-mentioned method embodiments, which will not be repeated redundantly herein. It should be noted that, the above-mentioned base station and user equipment may also have other structural division units.

Those of ordinary skill in the art may understand that all or a part of the steps of the methods in the above-mentioned embodiments may be implemented by a program instructing relevant hardware, the program may be stored in a computer readable storage medium, and the storage medium may include: a read-only memory (ROM), a random access memory (RAM), a magnetic disk, an optical disk or the like.

## Claims

1. A radio communication method, comprising:
grouping (101), by a base station, user equipments within a service range of the base station;
configuring (102), by the base station, radio resource patterns for user equipments in each group, wherein radio resource patterns configured for user equipments in a same group are identical, and radio resource patterns configured for user equipments in different groups are different, and wherein a radio resource pattern comprise at least one of the followings: a pattern used for a time domain resource, a pattern used for a frequency domain resource, a pattern used for a time-frequency domain resource, a pattern used for a code domain resource and a pattern used for a space domain resource; and
selecting (103), by the base station, according to the configured radio resource patterns, multiple user equipments, which are respectively in different communication states on a same radio resource, for communication, wherein the radio resource is a combination of a time and a frequency resource, wherein the multiple user equipments are respectively in different groups, and wherein the communication states comprise an uplink transmission state and a downlink receiving state.

2. The method of claim 1, wherein the grouping (101), by the base station, the user equipments within the service range of the base station, specifically comprises:
obtaining, by the base station, path loss information of the user equipments within the service range of the base station, and grouping user equipments, whose path loss differences are smaller than a preset path loss range, into one group; or
obtaining, by the base station, service parameters of the user equipments within the service range of the base station, and grouping user equipments with a uniform service parameter into one group, wherein the service parameter includes a service volume and/or a service type; or
obtaining, by the base station, duplexing technologies and/or multiple access technologies supported by the user equipments within the service range of the base station, and grouping user equipments supporting a same duplexing technology and/or multiple access technology into one group; or
randomly grouping, by the base station, the user equipments within the service range of the base station.

3. The method of any of claims 1 or 2, wherein after the configuring (102), by the base station, the radio resource pattern for the user equipments in each group, further comprising:
informing, by the base station, a corresponding user equipment of the configured radio resource pattern through a high layer signaling or a signaling carried by a downlink control channel.

4. The method of any of claims 1-3, the method further comprising:
configuring, by the base station, an identical reference signal resource to the user equipments in the same group, and configuring different reference signal resources for the user equipments in different groups, wherein the group comprises a first group and a second group;
sending, by the base station, an indication signaling of a reference signal resource configured for user equipments in the second group to user equipments in the first group; and
receiving, by the base station, a measurement result of a reference signal, wherein the reference signal is sent by a user equipment in the second group, the measurement result is sent by a user equipment in the first group, the measurement result is configured to indicate interference information between the user equipment in the first group and the user equipment in the second group,
wherein the selecting (103), by the base station, the user equipments, which are in different communication states on the same radio resource, for communication, specifically comprises:
selecting, by the base station, the user equipments, which are respectively in different communication states on the same radio resource and a mutual interference of which is smaller than a preset range, for communication.

5. The method of any of claims 1-4, further comprising:
configuring, by the base station, identical system information for the user equipments in the same group, and configuring different system information for the user equipments in different groups.

6. The method of claim 5, further comprising:
informing, by the base station, the user equipment of scheduling information of public system information or scheduling information of system information of a baseline group in the configured system information through a signaling carried by a physical downlink control channel, which is scrambled by a radio network temporary identifier of system information; or
informing, by the base station, the user equipment of scheduling information of the configured system information of all groups through a signaling carried by a physical downlink control channel, which is scrambled by a radio network temporary identifier of system information; or
informing, by the base station, the user equipment of scheduling information of update indication information of the configured public system information or scheduling information of update indication information of system information of a baseline group through a signaling carried by a physical downlink control channel, which is scrambled by a paging radio network temporary identifier; or
informing, by the base station, corresponding user equipments of scheduling information of system information of respective groups in the configured system information through signalings carried by a physical downlink control channel, which are scrambled by different group radio network temporary identifiers.

7. A base station, comprising:
a grouping unit (10), configured to group user equipments within a service range of a base station;
a resource pattern configuring unit (11), configured to configure radio resource patterns for user equipments in each group, wherein radio resource patterns configured for user equipments in a same group are identical, and radio resource patterns configured for user equipments in different groups are different, and wherein a radio resource pattern comprise at least one of the followings: a pattern used for a time domain resource, a pattern used for a frequency domain resource, a pattern used for a time-frequency domain resource, a pattern used for a code domain resource and a pattern used for a space domain resource; and
a communication unit (12), configured to select, according to the configured radio resource patterns configured by the resource pattern configuring unit, multiple user equipments, which are respectively in different communication states on a same radio resource for communication, wherein the radio resource is a combination of a time and a frequency resource, wherein the multiple user equipments are respectively in different groups, and wherein the communication states comprise an uplink transmission state and a downlink receiving state.

8. The base station of claim 7, wherein
the grouping unit (10) is specifically configured to obtain path loss information of the user equipments within the service range of the base station, and group user equipments, whose path loss differences are smaller than a preset path loss range, into one group; or
the grouping unit (10) is specifically configured to obtain service parameters of the user equipments within the service range of the base station, and group user equipments with a uniform service parameter into one group, wherein the service parameter includes a service volume and/or a service type; or
the grouping unit (10) is specifically configured to obtain duplexing technologies and/or multiple access technologies supported by the user equipments within the service range of the base station, and group user equipments supporting a same duplexing technology and/or multiple access technology into one group; or
the grouping unit (10) is specifically configured to randomly group the user equipments within the service range of the base station.

9. The base station of any of claims 7 or 8, further comprising:
a resource pattern informing unit, configured to inform of a corresponding user equipment of the configured radio resource pattern through a high layer signaling or a signaling carried by a downlink control channel.

10. The base station of any of claims 7-9, further comprising:
a reference resource configuring unit, configured to configure an identical reference signal resource for the user equipments in the same group and configuring different reference signal resources for the user equipments in different groups, wherein the group comprises a first group and a second group;
a reference resource informing unit, configured to send an indication signaling of a reference signal resources configured for user equipments in the second group to user equipments in the first group; and
a measurement result receiving unit, configured to receive a measurement result of a reference signal, wherein the reference signal is sent by a user equipment in the second group, the measurement result is sent by a user equipment in the first group, the measurement result is configured to indicate the interference information between the user equipment in the first group and the user equipment in the second group,
wherein the communication unit (12) is configured to select user equipments, which are respectively in different communication states on the same radio resource and a mutual interference of which is smaller than a preset range, for communication.

11. The base station of any of claims 7-10, further comprising:
a system information configuring unit, configured to configure identical system information for the user equipments in the same group and configure different system information for the user equipments in different groups.

12. The base station of claim 11, further comprising:
a system information informing unit, configured to inform the user equipment of scheduling information of public system information or scheduling information of system information of a baseline group in the configured system information through a signaling carried by a physical downlink control channel, which is scrambled by a radio network temporary identifier of system information; or
a system information informing unit, configured to inform the user equipment of scheduling information of the configured system information of all groups through a signaling carried by a physical downlink control channel, which is scrambled by a radio network temporary identifier of the system information; or
a system information informing unit, configured to inform the user equipment of scheduling information of update indication information of public system information or scheduling information of update indication information of system information of a baseline group in the configured system information through a signaling carried by a physical downlink control channel, which is scrambled by a paging radio network temporary identifier; or
a system information informing unit, configured to inform corresponding user equipments scheduling information of system information of respective groups in the configured system information through signalings carried by a physical downlink control channel, which are scrambled by different group radio network temporary identifiers.

## Patentansprüche

1. Funkkommunikationsverfahren, das Folgendes umfasst:
Gruppieren (101), durch eine Basisstation, von Benutzergeräten innerhalb eines Dienstbereichs der Basisstation;
Konfigurieren (102), durch die Basisstation, von Funkressourcenmustern für Benutzergeräte in jeder Gruppe, wobei Funkressourcenmuster, die für Benutzergeräte in derselben Gruppe konfiguriert sind, identisch sind und Funkressourcenmuster, die für Benutzergeräte in unterschiedlichen Gruppen konfiguriert sind, unterschiedlich sind und wobei ein Funkressourcenmuster mindestens eines der folgenden umfasst: ein Muster, das für eine Zeitbereichsressource verwendet wird, ein Muster, das für eine Frequenzbereichsressource verwendet wird, ein Muster, das für eine Zeit-Frequenz-Bereichsressource verwendet wird, ein Muster, das für eine Codedomänenressource verwendet wird, und ein Muster, das für eine Raumdomänenressource verwendet wird; und
Auswählen (103), durch die Basisstation, gemäß den konfigurierten Funkressourcenmustern, mehrerer Benutzergeräte, die sich jeweils in unterschiedlichen Kommunikationszuständen auf derselben Funkressource befinden, zur Kommunikation, wobei die Funkressource eine Kombination einer Zeit- und einer Frequenzressource ist, wobei sich die mehreren Benutzergeräte jeweils in unterschiedlichen Gruppen befinden und wobei die Kommunikationszustände einen Aufwärtsstreckenübertragungszustand und einen Abwärtsstreckenempfangszustand umfassen.

2. Verfahren nach Anspruch 1, wobei das Gruppieren (101), durch die Basisstation, der Benutzergeräte innerhalb des Dienstbereichs der Basisstation spezifisch Folgendes umfasst:
Erhalten, durch die Basisstation, von Pfadverlustinformationen der Benutzergeräte innerhalb des Dienstbereichs der Basisstation und Gruppieren von Benutzergeräten, deren Pfadverlustdifferenzen kleiner als ein voreingestellter Pfadverlustbereich sind, in eine Gruppe oder
Erhalten, durch die Basisstation, von Dienstparametern der Benutzergeräte innerhalb des Dienstbereichs der Basisstation und Gruppieren von Benutzergeräten mit einem einheitlichen Dienstparameter in eine Gruppe, wobei der Dienstparameter einen Dienstumfang und/oder eine Dienstart beinhaltet; oder
Erhalten, durch die Basisstation, von Duplex-Technologien und/oder Mehrfachzugriff-Technologien, die durch die Benutzergeräte innerhalb des Dienstbereichs der Basisstation unterstützt werden, und Gruppieren von Benutzergeräten, die die gleiche Duplex-Technologie und/oder Mehrfachzugriff-Technologie unterstützen, in eine Gruppe oder
zufälliges Gruppieren, durch die Basisstation, der Benutzergeräte innerhalb des Dienstbereichs der Basisstation.

3. Verfahren nach einem der Ansprüche 1 oder 2, wobei es nach dem Konfigurieren (102), durch die Basisstation, des Funkressourcenmusters für die Benutzergeräte in jeder Gruppe ferner Folgendes umfasst:
Benachrichtigen, durch die Basisstation, eines entsprechenden Benutzergeräts über das konfigurierte Funkressourcenmuster über eine Signalisierung hoher Schicht oder eine Signalisierung, die durch einen Abwärtsstreckensteuerkanal geführt wird.

4. Verfahren nach einem der Ansprüche 1-3, wobei das Verfahren ferner Folgendes umfasst:
Konfigurieren, durch die Basisstation, einer identischen Referenzsignalressource zu den Benutzergeräten in derselben Gruppe und Konfigurieren unterschiedlicher Referenzsignalressourcen für die Benutzergeräte in unterschiedlichen Gruppen, wobei die Gruppe eine erste Gruppe und eine zweite Gruppe umfasst;
Senden, durch die Basisstation, einer Indikationssignalisierung von Referenzsignalressourcen, die für Benutzergeräte in der zweiten Gruppe konfiguriert sind, zu Benutzergeräten in der ersten Gruppe und
Empfangen, durch die Basisstation, eines Messergebnisses eines Referenzsignals, wobei das Referenzsignal durch ein Benutzergerät in der zweiten Gruppe gesendet wird, das Messergebnis durch ein Benutzergerät in der ersten Gruppe gesendet wird, das Messergebnis konfiguriert ist, um Störinformationen zwischen dem Benutzergerät in der ersten Gruppe und dem Benutzergerät in der zweiten Gruppe anzugeben,
wobei das Auswählen (103), durch die Basisstation, der Benutzergeräte, die sich in unterschiedlichen Kommunikationszuständen auf derselben Funkressource befinden, zur Kommunikation spezifisch Folgendes umfasst:
Auswählen, durch die Basisstation, der Benutzergeräte, die sich jeweils in unterschiedlichen Kommunikationszuständen auf derselben Funkressource befinden und deren gegenseitige Störung kleiner als ein voreingestellter Bereich ist, zur Kommunikation.

5. Verfahren nach einem der Ansprüche 1-4, das ferner Folgendes umfasst:
Konfigurieren, durch die Basisstation, von identischen Systeminformationen für die Benutzergeräte in derselben Gruppe und Konfigurieren von unterschiedlichen Systeminformationen für die Benutzergeräte in unterschiedlichen Gruppen.

6. Verfahren nach Anspruch 5, das ferner Folgendes umfasst:
Benachrichtigen, durch die Basisstation, des Benutzergeräts über "Scheduling"-Informationen von öffentlichen Systeminformationen oder über "Scheduling"-Informationen von Systeminformationen einer Basisliniengruppe in den konfigurierten Systeminformationen über eine Signalisierung, die durch einen physischen Abwärtsstreckensteuerkanal geführt und durch eine temporäre Funknetzkennung von Systeminformationen verschlüsselt wird; oder
Benachrichtigen, durch die Basisstation, des Benutzergeräts über "Scheduling"-Informationen der konfigurierten Systeminformationen aller Gruppen über eine Signalisierung, die durch einen physischen Abwärtsstreckensteuerkanal geführt und durch eine temporäre Funknetzkennung von Systeminformationen verschlüsselt wird; oder
Benachrichtigen, durch die Basisstation, des Benutzergeräts über "Scheduling"-Informationen von Aktualisierungsindikationsinformationen der konfigurierten öffentlichen Systeminformationen oder über "Scheduling"-Informationen von Aktualisierungsindikationsinformationen von Systeminformationen einer Basisliniengruppe über eine Signalisierung, die durch einen physischen Abwärtsstreckensteuerkanal geführt und durch eine temporäre Paging-Funknetzkennung verschlüsselt wird; oder
Benachrichtigen, durch die Basisstation, von entsprechenden Benutzergeräten über "Scheduling"-Informationen von Systeminformationen jeweiliger Gruppen in den konfigurierten Systeminformationen über Signalisierungen, die durch einen physischen Abwärtsstreckensteuerkanal geführt und durch unterschiedliche temporäre Gruppen-Funknetzkennungen verschlüsselt werden.

7. Basisstation, die Folgendes umfasst:
eine Gruppierungseinheit (10), die ausgelegt ist zum Gruppieren von Benutzergeräten innerhalb eines Dienstbereichs einer Basisstation;
eine Ressourcenmuster-Konfigurierungseinheit (11), die ausgelegt ist zum Konfigurieren von Funkressourcenmustern für Benutzergeräte in jeder Gruppe, wobei Funkressourcenmuster, die für Benutzergeräte in derselben Gruppe konfiguriert sind, identisch sind und Funkressourcenmuster, die für Benutzergeräte in unterschiedlichen Gruppen konfiguriert sind, unterschiedlich sind und wobei ein Funkressourcenmuster mindestens eines der folgenden umfasst: ein Muster, das für eine Zeitbereichsressource verwendet wird, ein Muster, das für eine Frequenzbereichsressource verwendet wird, ein Muster, das für eine Zeit-FrequenzBereichsressource verwendet wird, ein Muster, das für eine Codedomänenressource verwendet wird, und ein Muster, das für eine Raumdomänenressource verwendet wird; und
eine Kommunikationseinheit (12), die ausgelegt ist zum Auswählen, gemäß den konfigurierten Funkressourcenmustern, die durch die Ressourcenmuster-Konfigurierungseinheit konfiguriert werden, mehrerer Benutzergeräte, die sich jeweils in unterschiedlichen Kommunikationszuständen auf derselben Funkressource befinden, zur Kommunikation, wobei die Funkressource eine Kombination einer Zeit- und einer Frequenzressource ist, wobei sich die mehreren Benutzergeräte jeweils in unterschiedlichen Gruppen befinden und wobei die Kommunikationszustände einen Aufwärtsstreckenübertragungszustand und einen Abwärtsstreckenempfangszustand umfassen.

8. Basisstation nach Anspruch 7, wobei
die Gruppierungseinheit (10) spezifisch ausgelegt ist zum Erhalten von Pfadverlustinformationen der Benutzergeräte innerhalb des Dienstbereichs der Basisstation und zum Gruppieren von Benutzergeräten, deren Pfadverlustdifferenzen kleiner als ein voreingestellter Pfadverlustbereich sind, in eine Gruppe oder
die Gruppierungseinheit (10) spezifisch ausgelegt ist zum Erhalten von Dienstparametern der Benutzergeräte innerhalb des Dienstbereichs der Basisstation und zum Gruppieren von Benutzergeräten mit einem einheitlichen Dienstparameter in eine Gruppe, wobei der Dienstparameter einen Dienstumfang und/oder eine Dienstart beinhaltet; oder
die Gruppierungseinheit (10) spezifisch ausgelegt ist zum Erhalten von Duplex-Technologien und/oder Mehrfachzugriff-Technologien, die durch die Benutzergeräte innerhalb des Dienstbereichs der Basisstation unterstützt werden, und zum Gruppieren von Benutzergeräten, die die gleiche Duplex-Technologie und/oder Mehrfachzugriff-Technologie unterstützen, in eine Gruppe oder
die Gruppierungseinheit (10) spezifisch ausgelegt ist zum zufälligen Gruppieren der Benutzergeräte innerhalb des Dienstbereichs der Basisstation.

9. Basisstation nach einem der Ansprüche 7 oder 8, die ferner Folgendes umfasst:
eine Ressourcenmuster-Benachrichtigungseinheit, die ausgelegt ist zum Benachrichtigen eines entsprechenden Benutzergeräts über das konfigurierte Funkressourcenmuster über eine Signalisierung hoher Schicht oder eine Signalisierung, die durch einen Abwärtsstreckensteuerkanal geführt wird.

10. Basisstation nach einem der Ansprüche 7-9, die ferner Folgendes umfasst:
eine Referenzressourcen-Konfigurierungseinheit, die ausgelegt ist zum Konfigurieren einer identischen Referenzsignalressource für die Benutzergeräte in derselben Gruppe und zum Konfigurieren unterschiedlicher Referenzsignalressourcen für die Benutzergeräte in unterschiedlichen Gruppen, wobei die Gruppe eine erste Gruppe und eine zweite Gruppe umfasst;
eine Referenzressourcen-Benachrichtigungseinheit, die ausgelegt ist zum Senden einer Indikationssignalisierung von Referenzsignalressourcen, die für Benutzergeräte in der zweiten Gruppe konfiguriert sind, zu Benutzergeräten in der ersten Gruppe und eine Messergebnis-Empfangseinheit, die ausgelegt ist zum Empfangen eines Messergebnisses eines Referenzsignals, wobei das Referenzsignal durch ein Benutzergerät in der zweiten Gruppe gesendet wird, das Messergebnis durch ein Benutzergerät in der ersten Gruppe gesendet wird, das Messergebnis konfiguriert ist, um Störinformationen zwischen dem Benutzergerät in der ersten Gruppe und dem Benutzergerät in der zweiten Gruppe anzugeben,
wobei die Kommunikationseinheit (12) ausgelegt ist zum Auswählen von Benutzergeräten, die sich jeweils in unterschiedlichen Kommunikationszuständen auf derselben Funkressource befinden und deren gegenseitige Störung kleiner als ein voreingestellter Bereich ist, zur Kommunikation.

11. Basisstation nach einem der Ansprüche 7-10, die ferner Folgendes umfasst:
eine Systeminformationen-Konfigurierungseinheit, die ausgelegt ist zum Konfigurieren von identischen Systeminformationen für die Benutzergeräte in derselben Gruppe und zum Konfigurieren von unterschiedlichen Systeminformationen für die Benutzergeräte in unterschiedlichen Gruppen.

12. Basisstation nach Anspruch 11, die ferner Folgendes umfasst: eine Systeminformationen-Benachrichtigungseinheit, die ausgelegt ist zum Benachrichtigen des Benutzergeräts über "Scheduling"-Informationen von öffentlichen Systeminformationen oder über "Scheduling"-Informationen von Systeminformationen einer Basisliniengruppe in den konfigurierten Systeminformationen über eine Signalisierung, die durch einen physischen Abwärtsstreckensteuerkanal geführt und durch eine temporäre Funknetzkennung von de ressources radio configure via une signal
eine Systeminformationen-Benachrichtigungseinheit, die ausgelegt ist zum Benachrichtigen des Benutzergeräts über "Scheduling"-Informationen der konfigurierten Systeminformationen aller Gruppen über eine Signalisierung, die durch einen physischen Abwärtsstreckensteuerkanal geführt und durch eine temporäre Funknetzkennung der Systeminformationen verschlüsselt wird; oder
eine Systeminformationen-Benachrichtigungseinheit, die ausgelegt ist zum Benachrichtigen des Benutzergeräts über "Scheduling"-Informationen von Aktualisierungsindikationsinformationen von öffentlichen Systeminformationen oder über "Scheduling"-Informationen von Aktualisierungsindikationsinformationen von Systeminformationen einer Basisliniengruppe in den konfigurierten Systeminformationen über eine Signalisierung, die durch einen physischen Abwärtsstreckensteuerkanal geführt und durch eine temporäre Paging-Funknetzkennung verschlüsselt wird; oder
eine Systeminformationen-Benachrichtigungseinheit, die ausgelegt ist zum Benachrichtigen von entsprechenden Benutzergeräten über "Scheduling"-Informationen von Systeminformationen jeweiliger Gruppen in den konfigurierten Systeminformationen über Signalisierungen, die durch einen physischen Abwärtsstreckensteuerkanal geführt und durch unterschiedliche temporäre Gruppen-Funknetzkennungen verschlüsselt werden.

## Revendications

1. Procédé de communication radio, comportant les étapes consistant à ;
faire regrouper (101), par une station de base, des équipements d'utilisateurs à l'intérieur d'une plage de desserte de la station de base ;
faire configurer (102), par la station de base, des motifs de ressources radio pour des équipements d'utilisateurs dans chaque groupe, des motifs de ressources radio configurés pour des équipements d'utilisateurs dans un même groupe étant identiques, et des motifs de ressources radio configurés pour des équipements d'utilisateurs dans des groupes différents étant différents, et un motif de ressources radio comportant au moins un des éléments suivants : un motif utilisé pour une ressource du domaine temporel, un motif utilisé pour une ressource du domaine fréquentiel, un motif utilisé pour une ressource du domaine temps-fréquence, un motif utilisé pour une ressource du domaine de code et un motif utilisé pour une ressource du domaine spatial ; et
faire sélectionner (103), par la station de base, d'après les motifs de ressources radio configurés, des équipements d'utilisateurs multiples, qui se trouvent respectivement dans des états de communication différents sur une même ressource radio, pour une communication, la ressource radio étant une combinaison d'une ressource en temps et en fréquence, les équipements d'utilisateurs multiples étant respectivement dans des groupes différents, et les états de communication comportant un état d'émission en liaison montante et un état de réception en liaison descendante.

2. Procédé selon la revendication 1, le regroupement (101), par la station de base, des équipements d'utilisateurs à l'intérieur de la plage de desserte de la station de base, comportant spécifiquement les étapes consistant à :
faire obtenir, par la station de base, des informations d'affaiblissement de trajet des équipements d'utilisateurs à l'intérieur de la plage de desserte de la station de base, et regrouper des équipements d'utilisateurs dont les différences d'affaiblissement de trajet sont inférieures à une plage prédéfinie d'affaiblissement de trajet en un seul groupe ; ou
faire obtenir, par la station de base, des paramètres de service des équipements d'utilisateurs à l'intérieur de la plage de desserte de la station de base, et regrouper des équipements d'utilisateurs présentant un paramètre de service uniforme en un seul groupe, le paramètre de service comprenant un volume de service et/ou un type de service ; ou
faire obtenir, par la station de base, des technologies de duplexage et/ou des technologies d'accès multiple prises en charge par les équipements d'utilisateurs à l'intérieur de la plage de desserte de la station de base, et regrouper des équipements d'utilisateurs prenant en charge une même technologie de duplexage et/ou une même technologie d'accès multiple en un seul groupe ; ou
faire regrouper aléatoirement, par la station de base, les équipements d'utilisateurs à l'intérieur de la plage de desserte de la station de base.

3. Procédé selon l'une quelconque des revendications 1 et 2, comportant en outre, après la configuration (102), par la station de base, du motif de ressources radio pour les équipements d'utilisateurs dans chaque groupe, l'étape consistant à :
faire informer, par la station de base, un équipement d'utilisateur correspondant du motif de ressources radio configuré via une signalisation de couche supérieure ou une signalisation transportée par un canal de commande de liaison descendante.

4. Procédé selon l'une quelconque des revendications 1 à 3, le procédé comportant en outre les étapes consistant à :
faire configurer, par la station de base, une ressource de signal de référence identique pour les équipements d'utilisateurs dans le même groupe, et configurer des ressources de signal de référence différentes pour les équipements d'utilisateurs dans des groupes différents, le groupe comportant un premier groupe et un deuxième groupe ; faire envoyer, par la station de base, une signalisation d'indication d'une ressource de signal de référence configurée pour des équipements d'utilisateurs dans le deuxième groupe à des équipements d'utilisateurs dans le premier groupe ; et
faire recevoir, par la station de base, un résultat de mesure d'un signal de référence, le signal de référence étant émis par un équipement d'utilisateur du deuxième groupe, le résultat de mesure étant émis par un équipement d'utilisateur du premier groupe, le résultat de mesure étant configuré pour indiquer des informations d'interférence entre l'équipement d'utilisateur du premier groupe et l'équipement d'utilisateur du deuxième groupe,
la sélection (103), par la station de base, des équipements d'utilisateurs qui se trouvent dans des états de communication différents sur la même ressource radio pour une communication, comportant spécifiquement l'étape consistant à :
faire sélectionner, par la station de base, les équipements d'utilisateurs, qui se trouvent respectivement dans des états de communication différents sur la même ressource radio et dont une interférence mutuelle est inférieure à une plage prédéfinie, pour une communication.

5. Procédé selon l'une quelconque des revendications 1 à 4, comportant en outre :
faire configurer, par la station de base, des informations de système identiques pour les équipements d'utilisateurs dans le même groupe, et configurer des informations de système différentes pour les équipements d'utilisateurs dans des groupes différents.

6. Procédé selon la revendication 5, comportant en outre les étapes consistant à :
faire informer, par la station de base, l'équipement d'utilisateur d'informations de programmation d'informations de système publiques ou d'informations de programmation d'informations de système d'un groupe étalon dans les informations de système configurées via une signalisation transportée par un canal physique de commande de liaison descendante, qui est embrouillée par un identifiant temporaire de réseau radio d'informations de système ; ou
faire informer, par la station de base, l'équipement d'utilisateur d'informations de programmation des informations de système configurées de tous les groupes via une signalisation transportée par un canal physique de commande de liaison descendante, qui est embrouillée par un identifiant temporaire de réseau radio d'informations de système ; ou
faire informer, par la station de base, l'équipement d'utilisateur d'informations de programmation d'informations d'indication de mise à jour des informations de système publiques configurées ou d'informations de programmation d'informations d'indication de mise à jour d'informations de système d'un groupe étalon via une signalisation transportée par un canal physique de commande de liaison descendante, qui est embrouillée par un identifiant temporaire de réseau radio de radiorecherche ; ou
faire informer, par la station de base, des équipements d'utilisateurs correspondants d'informations de programmation d'informations de système de groupes respectifs dans les informations de système configurées via des signalisations transportées par un canal physique de commande de liaison descendante, qui sont embrouillées par différents identifiants temporaires de réseaux radio de groupe.

7. Station de base, comportant :
une unité de regroupement (10), configurée pour regrouper des équipements d'utilisateurs à l'intérieur d'une plage de desserte d'une station de base ;
une unité de configuration de motifs de ressources (11), configurée pour configurer des motifs de ressources radio pour des équipements d'utilisateurs dans chaque groupe, des motifs de ressources radio configurés pour des équipements d'utilisateurs dans un même groupe étant identiques, et des motifs de ressources radio configurés pour des équipements d'utilisateurs dans des groupes différents étant différents, et un motif de ressources radio comportant au moins un des éléments suivants : un motif utilisé pour une ressource du domaine temporel, un motif utilisé pour une ressource du domaine fréquentiel, un motif utilisé pour une ressource du domaine temps-fréquence, un motif utilisé pour une ressource du domaine de code et un motif utilisé pour une ressource du domaine spatial ; et
une unité de communication (12), configurée pour sélectionner, d'après les motifs de ressources radio configurés qui sont configurés par l'unité de configuration de motifs de ressources, des équipements d'utilisateurs multiples, qui se trouvent respectivement dans des états de communication différents sur une même ressource radio pour une communication, la ressource radio étant une combinaison d'une ressource en temps et en fréquence, les équipements d'utilisateurs multiples étant respectivement dans des groupes différents, et les états de communication comportant un état d'émission en liaison montante et un état de réception en liaison descendante.

8. Station de base selon la revendication 7, l'unité de regroupement (10) étant spécifiquement configurée pour obtenir des informations d'affaiblissement de trajet des équipements d'utilisateurs à l'intérieur de la plage de desserte de la station de base, et regrouper des équipements d'utilisateurs dont les différences d'affaiblissement de trajet sont inférieures à une plage prédéfinie d'affaiblissement de trajet en un seul groupe ; ou
l'unité de regroupement (10) étant spécifiquement configurée pour obtenir des paramètres de service des équipements d'utilisateurs à l'intérieur de la plage de desserte de la station de base, et regrouper des équipements d'utilisateurs présentant un paramètre de service uniforme en un seul groupe, le paramètre de service comprenant un volume de service et/ou un type de service ; ou
l'unité de regroupement (10) étant spécifiquement configurée pour obtenir des technologies de duplexage et/ou des technologies d'accès multiple prises en charge par les équipements d'utilisateurs à l'intérieur de la plage de desserte de la station de base, et regrouper des équipements d'utilisateurs prenant en charge une même technologie de duplexage et/ou une même technologie d'accès multiple en un seul groupe ; ou
l'unité de regroupement (10) étant spécifiquement configurée pour regrouper aléatoirement les équipements d'utilisateurs à l'intérieur de la plage de desserte de la station de base.

9. Station de base selon l'une quelconque des revendications 7 et 8, comportant en outre :
une unité de notification de motifs de ressources, configurée pour informer d'un équipement d'utilisateur correspondant du motif de ressources radio configuré via une signalisation de couche supérieure ou une signalisation transportée par un canal de commande de liaison descendante.

10. Station de base selon l'une quelconque des revendications 7 à 9, comportant en outre :
une unité de configuration de ressources de référence, configurée pour configurer une ressource de signal de référence identique pour les équipements d'utilisateurs dans le même groupe et configurer des ressources de signal de référence différentes pour les équipements d'utilisateurs dans des groupes différents, le groupe comportant un premier groupe et un deuxième groupe ;
une unité de notification de ressources de référence, configurée pour envoyer une signalisation d'indication des ressources de signal de référence configurée pour des équipements d'utilisateurs dans le deuxième groupe à des équipements d'utilisateurs dans le premier groupe ; et
une unité de réception de résultat de mesure, configurée pour recevoir un résultat de mesure d'un signal de référence, le signal de référence étant émis par un équipement d'utilisateur du deuxième groupe, le résultat de mesure étant émis par un équipement d'utilisateur du premier groupe, le résultat de mesure étant configuré pour indiquer les informations d'interférence entre l'équipement d'utilisateur du premier groupe et l'équipement d'utilisateur du deuxième groupe, l'unité de communication (12) étant configurée pour sélectionner des équipements d'utilisateurs, qui se trouvent respectivement dans des états de communication différents sur la même ressource radio et dont une interférence mutuelle est inférieure à une plage prédéfinie, pour une communication.

11. Station de base selon l'une quelconque des revendications 7 à 10, comportant en outre :
une unité de configuration d'informations de système, configurée pour configurer des informations de système identiques pour les équipements d'utilisateurs dans le même groupe et configurer des informations de système différentes pour les équipements d'utilisateurs dans des groupes différents.

12. Station de base selon la revendication 11, comportant en outre :
une unité de notification d'informations de système, configurée pour informer l'équipement d'utilisateur d'informations de programmation d'informations de système publiques ou d'informations de programmation d'informations de système d'un groupe étalon dans les informations de système configurées via une signalisation transportée par un canal physique de commande de liaison descendante, qui est embrouillée par un identifiant temporaire de réseau radio d'informations de système ; ou
une unité de notification d'informations de système, configurée pour informer l'équipement d'utilisateur d'informations de programmation des informations de système configurées de tous les groupes via une signalisation transportée par un canal physique de commande de liaison descendante, qui est embrouillée par un identifiant temporaire de réseau radio des informations de système ; ou
une unité de notification d'informations de système, configurée pour informer l'équipement d'utilisateur d'informations de programmation d'informations d'indication de mise à jour d'informations de système publiques ou d'informations de programmation d'informations d'indication de mise à jour d'informations de système d'un groupe étalon dans les informations de système configurées via une signalisation transportée par un canal physique de commande de liaison descendante, qui est embrouillée par un identifiant temporaire de réseau radio de radiorecherche ; ou
une unité de notification d'informations de système, configurée pour informer des équipements d'utilisateurs correspondants d'informations de programmation d'informations de système de groupes respectifs dans les informations de système configurées via des signalisations transportées par un canal physique de commande de liaison descendante, qui sont embrouillées par différents identifiants temporaires de réseaux radio de groupe.
